# FASCICULE DE BREVET EUROPEEN

(11) **EP 2 121 361 B1**
(45) Date de publication et mention de la délivrance du brevet: **17.11.2010**
(21) Numéro de dépôt: 07847761.9
(22) Date de dépôt: 04.12.2007
(51) Int. Cl.: B60H 1/00

(54) **DISPOSITIF DE CLIMATISATION D'UN VEHICULE COMPORTANT UN RESEAU DE CONDUITS DE DEGIVRAGE**
KLIMAANLAGENVORRICHTUNG FÜR EIN FAHRZEUG MIT EINEM NETZWERK VON ENTEISUNGSKANÄLEN
AIR CONDITIONING DEVICE FOR A VEHICLE COMPRISING A NETWORK OF DE-ICING DUCTS

(30) Priorité: 19.12.2006 FR 0655620
(43) Date de publication de la demande: 25.11.2009
(73) Titulaire: Renault S.A.S., 92100 Boulogne-Billancourt (FR)
(72) Inventeur: DUBIEF, Flavien, 78180 Montigny le Bretonneux (FR); PATEYRON, Cyrille, 78400 Chatou (FR)
(86) Numéro de dépôt international: PCT/EP2007/063257
(87) Numéro de publication internationale: WO 2008/074630

(56) Documents cités:
- WO-A-03/078187
- FR-A- 2 876 958
- US-A1- 2004 203 333

## Description

La présente invention se rapporte à un dispositif de climatisation d'un véhicule comportant un réseau de conduits de dégivrage dans une planche de bord.

Elle concerne en particulier un tel dispositif dans lequel le réseau comporte un boîtier répartiteur qui présente une portion aval et une portion amont et dans lequel :
- une entrée d'air est adaptée à correspondre avec une ouverture de dégivrage d'un appareil de climatisation,
- des premières sorties sont adaptés à correspondre avec une frise de dégivrage de pare-brise,
- une deuxième sortie est adaptée à correspondre avec des ouïes latérales de dégivrage,
- des premières canalisations relient l'entrée aux premières sorties, et s'étendent entre des parois de séparation de conduits et des parois latérales du boîtier,
- une deuxième canalisation relient l'entrée à la deuxième sortie, et s'étend au moins en partie entre les parois de séparation de conduit,
- la deuxième canalisation débouche, côté entrée d'air, au centre de l'entrée d'air, et
- les premières canalisations débouchent de part et d'autre de la deuxième canalisation.

Un tel dispositif est décrit dans le document FR2876958, dans lequel une séparation est réalisée entre un conduit central et deux conduits latéraux distincts pour permettre une meilleure répartition du flux d'air sur l'étendue d'une frise de dégivrage du pare-brise ainsi qu'une amélioration du dégivrage des vitres latérales par la projection d'un flux d'air à travers de ouïes latérales.

Cependant, ce dispositif ne donne pas entière satisfaction car des pertes de charge importantes apparaissent, causées par des décollements tourbillonnaires, rendant la vitesse de l'air dans les conduits inhomogène. Par ailleurs, la zone centrale de la frise de dégivrage du pare-brise est alors insuffisamment alimentée en air. Enfin, des résistances à l'écoulement pénalisent l'écoulement de l'air vers les conduits latéraux, rendant le dégivrage des vitres latérales insuffisant.

Le but de l'invention est de proposer un boîtier répartiteur pour un dispositif de climatisation d'un véhicule comportant un réseau de conduits de dégivrage dans une planche de bord qui ne présente plus les inconvénients mentionnés précédemment.

L'invention a pour objet un boîtier répartiteur par ailleurs conforme au préambule précité présentant un profil différentié suivant le plan (L-V) entre les première (340) et deuxième (350) canalisations, suivant les caractéristiques de la revendication indépendante 1, et un véhicule suivant les caractéristiques de la revendication indépendante 11.

Suivant des modes particuliers de réalisation, le boîtier répartiteur comporte l'une ou plusieurs des caractéristiques suivantes :
- la portion aval de la deuxième canalisation comporte des première et deuxième parois qui s'étendent latéralement entre les parois de séparation de conduit, ces parois étant sensiblement parallèles les unes aux autres, et s'étendant globalement de façon rectiligne, de manière à limiter la résistance à l'écoulement de l'air émis par l'appareil de climatisation ;
- les premières sorties sont au nombre de deux et sont disposées latéralement autour de la deuxième sortie, chaque canalisation correspondant avec un orifice de la frise, la frise comportant deux orifices distants ;
- les premières canalisations présentent un profil en S dans le plan (L-V);
- un déflecteur est disposé, dans la deuxième canalisation, au niveau des parois avant des conduits latéraux, ce déflecteur présentant une convexité vers l'amont sensiblement à mi-chemin entre les parois de séparation de conduit pour le guidage du flux d'air vers les ouïes latérales ;
- un déflecteur est disposé, dans la deuxième canalisation, au niveau des parois avant des conduits latéraux, ce déflecteur comportant un orifice additionnel, pour le dégivrage de la zone centrale du pare-brise, et des convexités vers l'amont autour de cet orifice additionnel, pour le guidage du flux d'air vers les ouïes latérales ;
- un orifice additionnel s'étend entre des parois de conduit additionnel disposées dans la deuxième canalisation, l'air à destination des ouïes latérales passant de part et d'autre de l'orifice additionnel, entre les parois de séparation de conduits et des déflecteurs latéraux qui s'étendent entre les arêtes amont des parois de conduit additionnel et la paroi avant des conduits latéraux ;
- les déflecteurs latéraux ont une forme courbe pour limiter la résistance à l'écoulement de l'air vers les ouïes latérales ;
- les parois de séparation de conduit et/ou les parois de conduit additionnel sont mobiles en translation et/ou en rotation de manière à modifier la proportion de flux d'air entres les sorties du boîtier répartiteur ;
- le boîtier répartiteur est formé d'un premier et d'un deuxième élément qui forme couvercle, au moins l'un parmi eux portant un joint d'étanchéité.

L'invention a également pour objet un dispositif de climatisation pour un véhicule comportant un réseau de conduits de dégivrage dans une planche de bord, ledit réseau comportant un boîtier répartiteur selon l'invention qui présente une portion aval correspondant avec un réseau de conduits pour distribuer de l'air soufflé vers une frise de dégivrage et des ouïes latérales, et une portion amont correspondant avec une sortie d'un appareil de climatisation.

L'invention concerne également un véhicule comportant un dispositif de climatisation selon l'invention adapté dans la planche de bord du véhicule, de manière que l'air émis l'appareil de climatisation circule jusqu'à la frise de pare-brise et aux ouïes latérales.

D'autres caractéristiques et avantages de l'invention apparaîtront clairement à la lecture de la description suivante du mode de réalisation non limitatif de celle-ci, en liaison avec les dessins annexés sur lesquels :
- la figure 1 est une vue en perspective de trois quarts arrière et de dessus d'une planche de bord adaptée à recevoir un dispositif selon l'invention,
- la figure 2 est une vue en perspective de trois quarts arrière d'un boîtier répartiteur selon l'invention,
- la figure 3 est une vue en perspective de trois quarts avant du boîtier de la figure 2,
- la figure 4 est une vue en coupe du boîtier de la figure 3 selon la coupe IV-IV,
- la figure 5 est une vue en coupe du boîtier de la figure 3 selon la coupe V-V,
- la figure 6A est une vue en perspective de trois quarts arrière et de dessus du réseau de conduits et des conduits latéraux,
- la figure 6B est un schéma montrant l'écoulement de l'air dans les canalisations selon un premier mode de réalisation,
- la figure 7 est un schéma montrant l'écoulement de l'air dans les canalisations selon un deuxième mode de réalisation,
- la figure 8 est un schéma montrant l'écoulement de l'air dans les canalisations selon un troisième mode de réalisation.

Dans la description qui va suivre, la direction désignée L est la direction longitudinale correspondant à l'axe d'avancement d'un véhicule, la direction désignée T est transversale, la direction désignée V est verticale. L'axe L est orienté de l'avant vers l'arrière du véhicule, l'axe T de la gauche vers la droite et l'axe V du bas vers le haut. Par ailleurs, on désignera des éléments en fonction de leur position dans le flux d'air, l'air passant ainsi par des éléments dits « amont » avant de passer par des éléments dits « aval ».

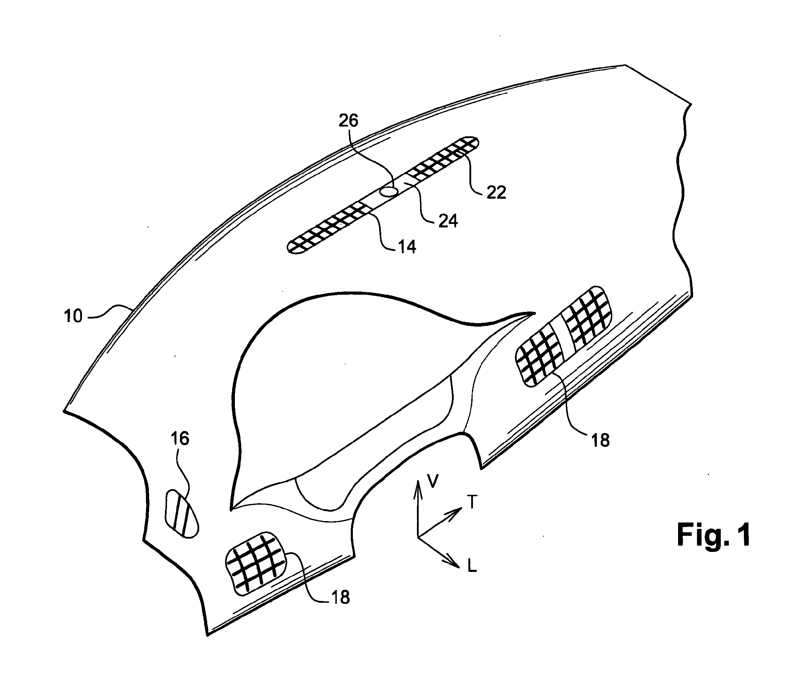

Traditionnellement, comme représenté à la figure 1, un véhicule automobile est équipé d'un poste de conduite comportant une planche de bord 10 et un appareil de climatisation dissimulé à la vue d'un utilisateur par la planche de bord 10. L'appareil de climatisation est destiné à délivrer de l'air dans l'habitacle, réchauffé si nécessaire, voire refroidi dans certains cas.

Pour le dégivrage ou le désembuage du pare-brise, l'air sort dans l'habitacle par une frise de dégivrage 14 aménagée dans la planche de bord 10. Pour le dégivrage ou le désembuage des vitres latérales avant, l'air sort dans l'habitacle par des ouïes latérales 16 aménagées dans la planche de bord 10.

La frise de dégivrage 14 et les ouies latérales 16 sont reliées à l'appareil de climatisation par l'intermédiaire d'un réseau de conduits. En particulier, elles sont reliées à une unique sortie de dégivrage à travers laquelle il est prévu que l'appareil délivre l'air destiné au dégivrage ou désembuage.

Des aérateurs 18 sont aussi aménagés dans la planche de bord 10 pour le confort des occupants. Les aérateurs 18 sont aussi reliés à au moins une ouverture d'aération de l'appareil de climatisation par des canalisations.

Ici, la frise de dégivrage 14 est placée sensiblement au milieu du pare-brise. Elle s'étend dans la direction transversale. Dans l'exemple représenté, la longueur de la frise représente sensiblement un quart à un tiers de l'étendue transversale de la planche. Afin d'optimiser le flux d'air sur le pare-brise, la frise 14 comporte deux orifices 22 distants transversalement. Les orifices 22 sont chacun munis d'une grille. Les orifices 22 distincts, indépendants, séparés et décalés transversalement permettent, tout en disposant d'une frise centrale, de bien répartir la projection d'air dans les zones du pare-brise à travers lesquelles le conducteur doit pouvoir voir pour conduire.

Un cache transversal 24 sépare les grilles. Dans l'exemple représenté, le cache 24 délimite un trou en correspondance d'un capteur d'ensoleillement 26 dont la mesure est utilisée par l'appareil de climatisation.

Une distance d'environ soixante à soixante dix centimètres sépare les ouïes 16 du milieu de l'ouverture 20 de l'appareil alors qu'une distance de dix à vingt centimètres sépare l'ouverture 20 de la frise 14. La section des canalisations reliant l'ouverture 20 aux ouïes 16 est différente de celle des canalisations reliant l'ouverture 20 aux ouvertures 22 de la frise 14. La perte de charge dans les canalisations reliant l'ouverture 20 aux ouïes 16 est différente de celle dans les canalisations reliant l'ouverture 20 aux ouvertures 22 de la frise 14.

Le débit d'air pour la fonction dégivrage doit être sensiblement réparti de la manière suivante : 60% à 90% pour la frise 14, 5% à 20% pour chacune des ouïes 16, sachant que dans l'exemple décrit, la distance entre la frise et les zones du pare-brise à dégivrer est sensiblement égale à la distance entre chaque ouïe et la vitre latérale correspondante.

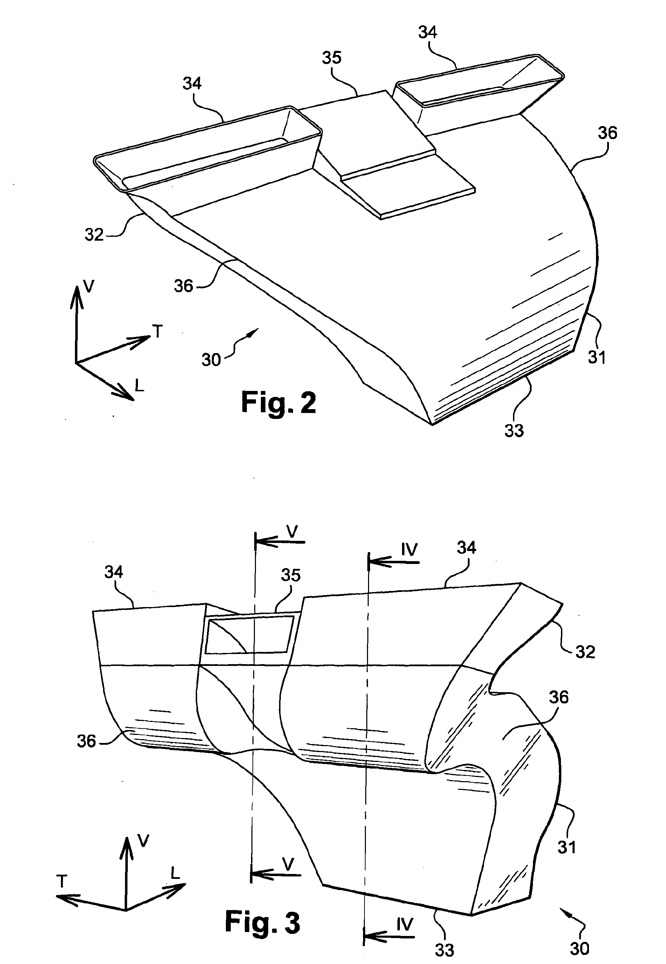

Sur les figures 2 et 3 est représenté un boîtier répartiteur 30 du flux d'air généré par l'appareil de climatisation.

On peut distinguer deux portions sur ce boîtier répartiteur 30, une première portion dite amont 31 et une deuxième portion dite aval 32. Généralement, ce boîtier répartiteur 30 prend place dans la planche de bord 10 sensiblement verticalement, si bien que la portion amont 31 peut être désignée d'inférieure et la portion aval 32 peut être désignée de supérieure.

Dans sa portion amont 31, le boîtier répartiteur 30 présente une entrée 33 qui coopère avec une sortie de l'appareil de climatisation.

Dans sa portion aval 32, le boîtier répartiteur 30 présente des premières 34 et une deuxième 35 sorties.

Les premières sorties 34 sont disposées dans la portion supérieure 32 du boîtier 30, latéralement de part et d'autre de la deuxième sortie 35 et coopèrent avec des conduits de frise de pare-brise 14.

La deuxième sortie 35 est disposée globalement au centre de la portion supérieure 32 du boîtier répartiteur 30 et coopère avec des conduits latéraux 28 qui permettent d'amener l'air jusqu'aux ouïes latérales 16.

Globalement, selon un plan V-T, le boîtier répartiteur a une forme évasée délimitée par des parois latérales 36, les dimensions de l'orifice d'entrée 33 étant réduites par rapport aux dimensions de l'ensemble des premières 34 et deuxième 35 sorties situées dans la portion supérieure 32.

Le boîtier répartiteur 30 est sensiblement symétrique par rapport au plan L-V passant par le centre de la deuxième sortie 35.

Le boîtier répartiteur 30 présente un profil différentié suivant ce plan L-V, entre une zone centrale et les zones latérales du boîtier 30, et en particulier les profils des premières et deuxième parois qui s'étendent latéralement entre les parois latérales du boîtier 36. Ces première et deuxième parois s'étendent sensiblement parallèlement l'une par rapport à l'autre.

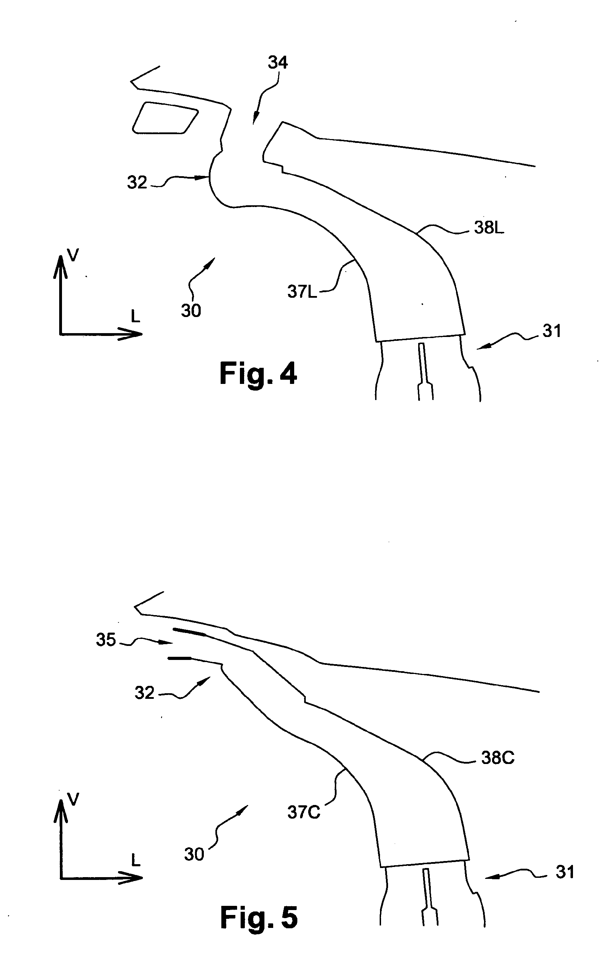

La figure 4 présente une coupe du boîtier répartiteur 30 au niveau d'une de ses zones latérales, selon l'axe IV-IV. Dans les zones latérales, les premières 37L et deuxième 38L parois ont un profil en S avec une première et une deuxième courbure.

La première courbure s'étend globalement dans la portion amont ou inférieure 31 du boîtier 30. Cette courbure forme une concavité sur la face externe de la première paroi 37L, qui lorsque le boîtier 30 se situe dans la planche de bord 10, est placée en avant de la deuxième paroi 38L.

La deuxième courbure s'étend globalement dans la portion aval ou supérieure 32 du boîtier 30. Cette courbure forme une concavité sur la face externe de la deuxième paroi 38L, qui lorsque le boîtier 30 se situe dans la planche de bord 10, est placée au dessus de la première paroi 37L.

La première courbure permet d'amener l'air vers l'avant et la partie supérieure de la planche de bord 10 à partir de l'appareil de climatisation qui se situe généralement dans la partie inférieure et en arrière de la planche de bord 10.

La deuxième courbure permet d'amener l'air vers les premières sorties 34 et d'orienter le flux d'air vers la frise de dégivrage 14.

Les rayons des première et deuxième courbures sont adaptés pour limiter les pertes de charge.

La figure 5 présente une coupe du boîtier répartiteur au niveau de la zone centrale selon l'axe V-V et en particulier des premières 37C et deuxième 38C parois de boîtier répartiteur 30.

Dans cette zone centrale et dans sa portion amont 31, le boîtier répartiteur 30 présente une courbure semblable à la première courbure formée dans les zones latérales mais se différencie dans sa portion aval 32.

Dans cette portion 32, les première 37C et deuxième paroi 38C s'étendent globalement parallèlement et de façon rectiligne l'une par rapport à l'autre. Lorsque le boîtier 30 se situe dans la planche de bord 10, la première paroi 37C se situe au dessous de la deuxième paroi 38C.

Cette portion aval 32 du boîtier répartiteur 30 est dans sa zone centrale, exempte de chicane ou autre obstacle d'écoulement et permet d'augmenter le flux d'air vers les conduits latéraux 28 et donc vers les ouïes latérales 16.

Lors de l'utilisation d'un boîtier répartiteur conforme au document FR2876958, le flux d'air se répartit sensiblement à environ 85% pour la frise de pare-brise, également réparti entre le conducteur et le passager, et à environ 7,5 % sur chaque ouïe latérale. Avec un boîtier répartiteur 30 selon l'invention, on obtient une augmentation relative comprise entre 15 et 30 % du flux d'air dans les ouïes latérales 16.

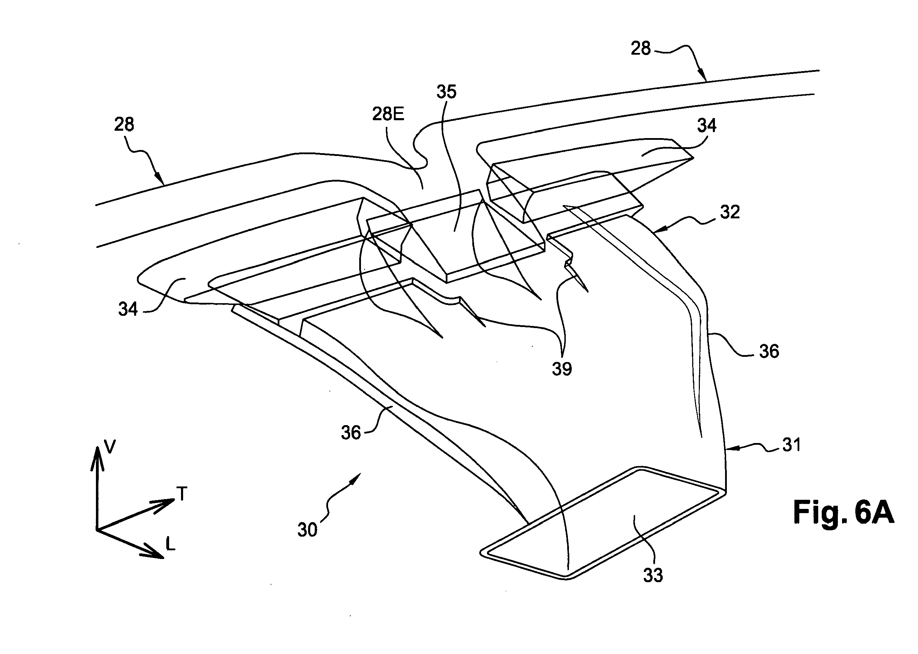

La figure 6A montre le positionnement des conduits latéraux 28 sur le boîtier répartiteur 30. Ces conduits latéraux 28 présentent une entrée commune 28E qui coopère avec la deuxième sortie 35 du boîtier répartiteur 30 et deux portions qui s'étendent latéralement de part et d'autre du boîtier 30 vers les bords latéraux de la planche de bord 10 jusqu'à déboucher au niveau des ouïes latérales 16.

Dans sa portion supérieure 32, le boîtier répartiteur 30 présente des parois de séparation de conduit 39.

Les premières canalisations, latérales, 34 sont alors délimitées par les première 37L et deuxième 38L parois dans le plan V-L et par les parois latérales 36 et les parois de séparation de conduit 39 du boîtier 30 dans le plan V-T, et s'étendent jusqu'aux premières sorties 34.

La deuxième canalisation, centrale, 35 est alors délimitée par les première 37L et deuxième 38L parois dans le plan V-L et par les parois de séparation de conduit 39 du boîtier 30 dans le plan V-T, et s'étend jusqu'à la deuxième sortie 35.

Le flux est alors divisé en trois canalisations, des premières canalisations latérales 34 au nombre de deux et une deuxième canalisation centrale unique 35.

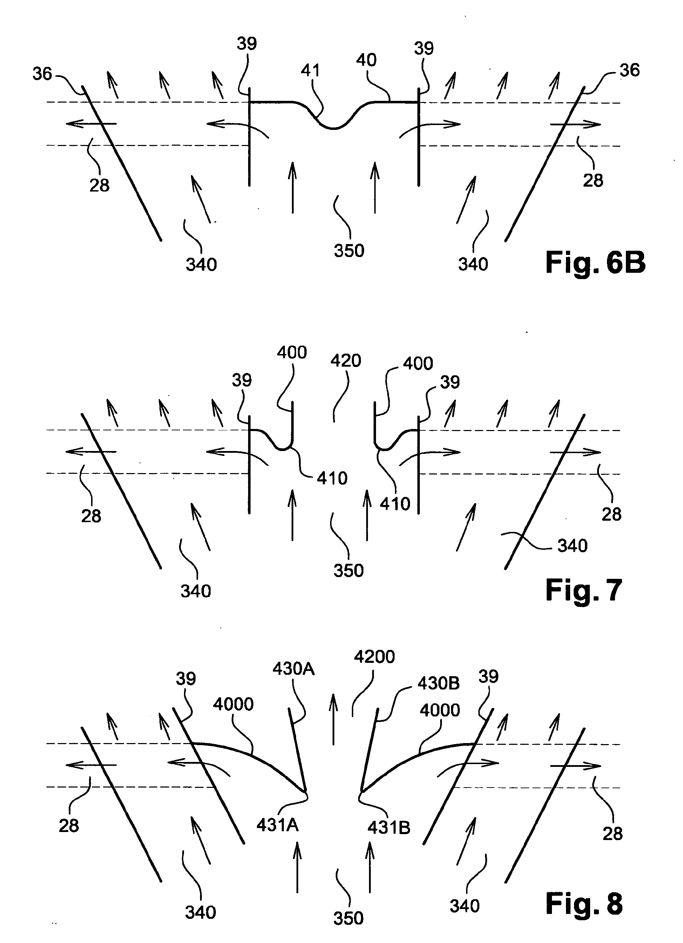

La figure 6B montre schématiquement les flux d'air circulant dans les différentes canalisations du boîtier répartiteur 30 selon un premier mode de réalisation.

Selon ce premier mode de réalisation, les parois de séparation de conduits 39 s'étendent, d'amont en aval, sensiblement parallèlement l'une à l'autre.

Au niveau de la sortie vers les conduits latéraux 28, la deuxième canalisation centrale 350 comporte un déflecteur 40 qui s'étend latéralement entre les parois de séparation de conduit 39, au niveau des parois avant des conduits latéraux 28. Ce déflecteur 40 a pour but de diviser, de manière sensiblement égale, le flux d'air central vers les conduits latéraux 28. Selon ce premier mode de réalisation, la division de flux se fait par une convexité 41 vers l'amont disposée sensiblement à mi-chemin entre les deux parois de séparation de conduit 39.

Avantageusement, les arêtes de la convexité 41 sont arrondies pour optimiser l'écoulement de l'air.

La séparation du flux en deux parties se faisant le plus en aval possible, les parois de séparation de conduit 39 peuvent être resserrées ce qui ménage un espace supplémentaire pour diriger le flux. Par ailleurs, le resserrement des parois 39 permet d'augmenter la taille des premières canalisations latérales 340 et par suite le flux d'air sur le pare-brise.

En conséquence, le rayon de courbure de la trajectoire du flux est réduit, l'écoulement de l'air est moins contraint, la perte de charge réduite, ce qui permet d'augmenter le débit d'air capté dans les conduits latéraux 28.

La figure 7 montre schématiquement les flux d'air circulant dans les différentes canalisations du boîtier répartiteur 30 selon un deuxième mode de réalisation.

Ce deuxième mode de réalisation diffère du premier par la modification du déflecteur 400 disposé dans la deuxième canalisation centrale 350. Le déflecteur 400 présente un orifice additionnel 420 de passage d'air situé sensiblement à mi-chemin entre les deux parois de séparation de conduit 39 et autour duquel sont formées deux convexités 410, 411 vers l'amont.

Avantageusement, les arêtes des convexités 410, 411 sont arrondies pour optimiser l'écoulement de l'air.

L'orifice additionnel 420 coopère avec un conduit additionnel de dégivrage de pare-brise. Ce conduit additionnel permet de dégivrer le pare-brise dans sa partie centrale.

Grâce à cet orifice additionnel 420, le flux d'air sur le pare-brise est mieux réparti que dans le premier mode de réalisation, le flux d'air sur le pare-brise venant des deux premières canalisation latérales 34 mais aussi du conduit additionnel central 421.

La figure 8 montre schématiquement les flux d'air circulant dans les différentes canalisations du boîtier répartiteur 30 selon un troisième mode de réalisation.

Selon ce mode de réalisation, les dimensions des premières canalisations latérales 36 sont réduites au détriment de la première canalisation centrale 350 par un positionnement transversal des parois de séparation de conduit 39 plus proche des parois latérales 36 du boîtier 30 que dans les deux premiers modes de réalisation. Les parois de séparation de conduit 39 forment un angle s'approchant des angles des parois latérales 36 du boîtier 30.

La deuxième canalisation centrale 350 accueille un conduit additionnel élargi 4200. Ce conduit additionnel 4200 est délimité par des parois additionnelles 430A, 430B. Les parois de séparation de conduits 39 et les parois additionnelles 430A, 430B s'étendent sur une longueur sensiblement égale.

Des déflecteurs 4000, de forme courbes, lient les arrêtes amont 431A, 431 B des parois additionnelles 430A, 430B à leurs conduits latéraux 28 respectifs. La courbure de ces déflecteurs 4000 permet d'orienter le flux d'air dans les conduits latéraux 28 progressivement pour limiter les pertes de charge.

Ce mode de réalisation est particulièrement adapté à une frise de dégivrage 14 en trois parties, pour un dégivrage du pare-brise accru dans sa partie centrale.

En variante, on peut prévoir que les arrêtes amont 431A, 431 B des parois additionnelles 430A, 430B soient arrondies de manière à limiter les résistances à l'écoulement de l'air.

Concernant la fabrication et l'assemblage, le boîtier répartiteur 30 peut être réalisé en deux éléments. Un premier élément 310 formant conduit et un deuxième élément 320 qui est inclus dans la planche de bord 10. Le deuxième élément 320 forme alors couvercle pour fermer le boîtier 30 en intercalant un joint entre ces deux éléments 310, 320.

Avantageusement, si le profil des faces des éléments est peu anguleux, un joint droit simple peut être collé sur au moins un des éléments 310, 320 pour réaliser l'étanchéité.

Selon une première variante de réalisation, les parois de séparation de conduit 39 et/ou les parois de conduit additionnel 430A, 430B sont mobiles en translation et/ou en rotation de manière à modifier la proportion de flux d'air entres les sorties du boîtier répartiteur 30.

Selon une deuxième variante de réalisation, la deuxième canalisation centrale 350 dirigeant l'air vers la deuxième sortie 35 située au centre du boîtier répartiteur 30 peut être formée par un élément indépendant des autres éléments du boîtier 30.

Selon une troisième variante de réalisation, des nervures de guidage de l'air peuvent être disposées sur la paroi avant interne de la partie amont du boîtier 30 pour augmenter le flux d'air circulant dans la deuxième canalisation centrale 350.

## Revendications

1. Boîtier répartiteur (30) présentant une portion amont (31) et une portion aval (32) élargie, selon un axe transversal (T) du boitier, horizontal lorsque ledit boitier est monté, par rapport à la portion amont (31) et dans lequel :
- une entrée d'air (33) est formée dans la portion amont (31) et adaptée à correspondre avec une sortie d'un appareil de climatisation,
- des premières (34) et deuxième (35) sorties sont formées dans la portion aval (32) et sont respectivement adaptées à correspondre avec un réseau de conduit pour distribuer de l'air soufflé vers une frise de dégivrage (14) et des ouïes latérales (16),
- des premières canalisations (340) relient l'entrée (33) aux premières sorties (34), et s'étendent entre des parois de séparation de conduits (39) et des parois latérales (36) du boîtier (30),
- une deuxième canalisation (350) relie l'entrée (33) à la deuxième sortie (35), et s'étend au moins en partie entre les parois de séparation de conduit (39),
- la deuxième canalisation (350) débouche, côté entrée d'air (33), au centre de l'entrée d'air (33), et
- les premières canalisations (340) débouchent de part et d'autre de la deuxième canalisation (350) **caractérisé en ce que** le boîtier (30) présente un profil différentié suivant un plan (L-V) perpendiculaire audit axe transversal (T), entre les première (340) et deuxième (350) canalisations.

2. Boîtier selon la revendication 1 **caractérisé en ce que** la portion aval (32) de la deuxième canalisation (35) comporte des première (37C) et deuxième (38C) parois qui s'étendent latéralement entre les parois de séparation de conduit (39), ces parois (37C, 38C) étant sensiblement parallèles les unes aux autres, et s'étendant globalement de façon rectiligne, de manière à limiter la résistance à l'écoulement de l'air émis par l'appareil de climatisation.

3. Boîtier selon la revendication 2, **caractérisé en ce que** les premières sorties (34) sont au nombre de deux et sont disposées latéralement autour de la deuxième sortie (35), chaque canalisation (340) correspondant avec un orifice (22) de la frise (14), la frise comportant deux orifices distants.

4. Boîtier selon l'une quelconque des revendications précédentes, **caractérisé en ce que** les premières canalisations (340) présentent un profil en S dans le plan (L-V).

5. Boîtier selon la revendication 1 à 4, **caractérisé en ce qu'**un déflecteur (40) est disposé, dans la deuxième canalisation (350), au niveau des parois avant des conduits latéraux (28), ce déflecteur (40) présentant une convexité (41) vers l'amont sensiblement à mi-chemin entre les parois de séparation de conduit (39) pour le guidage du flux d'air vers les ouïes latérales (16).

6. Boîtier selon la revendication 1 à 4, **caractérisé en ce qu'**un déflecteur (400) est disposé, dans la deuxième canalisation (350), au niveau des parois avant des conduits latéraux (28), ce déflecteur (400) comportant un orifice additionnel (420), pour le dégivrage de la zone centrale du pare-brise, et des convexités (410, 411) vers l'amont autour de cet orifice additionnel, pour le guidage du flux d'air vers les ouïes latérales (16).

7. Boîtier selon la revendication 1 à 4, **caractérisé en ce qu'**un orifice additionnel (4200) s'étend entre des parois de conduit additionnel (430A, 430B) disposées dans la deuxième canalisation (350), l'air à destination des ouïes latérales (16) passant de part et d'autre de l'orifice additionnel (4200), entre les parois de séparation de conduits (39) et des déflecteurs latéraux (4000) qui s'étendent entre les arêtes amont (431A, 431B) des parois de conduit additionnel (430A, 430B) et la paroi avant des conduits latéraux (28).

8. Boîtier selon la revendication 7, **caractérisé en ce que** les déflecteurs latéraux (4000) ont une forme courbe pour limiter la résistance à l'écoulement de l'air vers les ouïes latérales (16).

9. Boîtier selon l'une des revendications précédentes, **caractérisé en ce que** les parois de séparation de conduit (39) et/ou les parois de conduit additionnel (430A, 430B) sont mobiles en translation et/ou en rotation de manière à modifier la proportion de flux d'air entres les sorties du boîtier répartiteur (30).

10. Boîtier selon l'une des revendications précédentes, **caractérisé en ce que** il est formé d'un premier (310) et d'un deuxième élément (320) qui forme couvercle, au moins l'un parmi eux portant un joint d'étanchéité.

11. Véhicule **caractérisé en ce qu'**il comporte un boîtier selon l'une quelconque des revendications précédentes, le boîtier étant adapté dans la planche de bord de manière que l'air émis par un appareil de climatisation circule jusqu'à la frise de pare-brise (14) et aux ouïes latérales (16).

## Claims

1. Distribution housing (30) having an upstream portion (31) and a downstream portion (32) that is widened, on a transverse axis (T) of the housing that is horizontal when the housing is mounted, relative to the upstream portion (31) and wherein:
- an air inlet (33) is formed in the upstream portion (31) and adapted to correspond with an outlet of an air conditioning apparatus,
- first outlets (34) and a second outlet (35) are formed in the downstream portion (32) and are respectively adapted to correspond with a duct network for distributing the air blown toward a defrosting frieze (14) and side outlets (16),
- first pipes (340) connect the inlet (33) to the first outlets (34), and extend between duct-separating walls (39) and side walls (36) of the housing (30),
- a second pipe (350) connects the inlet (33) to the second outlet (35), and extends at least partly between the duct-separating walls (39),
- the second pipe (350) leads, on the air inlet side (33), to the centre of the air inlet (33), and
- the first pipes (340) lead to either side of the second pipe (350), **characterized in that** the housing (30) has a differentiated profile along a plane (L-V) that is perpendicular to said transverse axis (T), between the first pipe (340) and the second pipe (350).

2. Housing according to Claim 1, **characterized in that** the downstream portion (32) of the second pipe (350) comprises a first wall (37C) and a second wall (38C) which extend sideways between the duct-separating walls (39), these walls (37C, 38C) being substantially parallel with one another, and extending generally in a rectilinear manner, so as to limit the resistance to the air flow emitted by the air conditioning apparatus.

3. Housing according to Claim 2, **characterized in that** the first outlets (34) are two in number and are placed laterally around the second outlet (35), each pipe (340) corresponding with an orifice (22) of the frieze (14), the frieze comprising two distant orifices.

4. Housing according to any one of the preceding claims, **characterized in that** the first pipes (340) have an S-shaped profile in the plane (L-V).

5. Housing according to Claims 1 to 4, **characterized in that** a baffle (40) is placed, in the second pipe (350), at the front walls of the side ducts (28), this baffle (40) having a convexity (41) toward the upstream that is substantially half-way between the duct-separating walls (39) in order to guide the air flow toward the side outlets (16).

6. Housing according to Claims 1 to 4, **characterized in that** a baffle (400) is placed, in the second pipe (350), at the front walls of the side ducts (28), this baffle (400) comprising an additional orifice (420) for the defrosting of the central zone of the windshield, and convexities (410, 411) toward the upstream around this additional orifice, in order to guide the air flow toward the side outlets (16).

7. Housing according to Claims 1 to 4, **characterized in that** an additional orifice (4200) extends between the additional duct walls (430A, 430B) placed in the second pipe (350), the air destined for the side outlets (16) passing on either side of the additional orifice (4200), between the duct-separating walls (39) and side baffles (4000) which extend between the upstream ridges (431A, 431B) of the additional duct walls (430A, 430B) and the front wall of the side ducts (28).

8. Housing according to Claim 7, **characterized in that** the side baffles (4000) have a curved shape in order to limit the resistance to the air flow toward the side outlets (16).

9. Housing according to one of the preceding claims, **characterized in that** the duct-separating walls (39) and/or the additional duct walls (430A, 430B) can be moved in translation and/or in rotation so as to change the proportion of air flow between the outlets of the distribution housing (30).

10. Housing according to one of the preceding claims, **characterized in that** it is formed of a first element (310) and a second element (320) which forms a cover, at least one of them supporting a seal.

11. Vehicle, **characterized in that** it comprises a housing according to any one of the preceding claims, the housing being fitted into the instrument panel so that the air emitted by an air conditioning apparatus travels to the windshield frieze (14) and to the side outlets (16).

## Patentansprüche

1. Verteilergehäuse (30), das einen vorderen Abschnitt (31) und einen hinteren Abschnitt (32) aufweist, der gemäß einer bei eingebautem Gehäuse waagrechten Querachse (T) des Gehäuses bezüglich des vorderen Abschnitts (31) verbreitert ist, und bei dem:
- ein Lufteinlass (33) im vorderen Abschnitt (31) geformt und geeignet ist, um einem Auslass eines Klimageräts zu entsprechen,
- erste (34) und zweite (35) Auslässe im hinteren Abschnitt (32) geformt und jeweils geeignet sind, um einem Kanalsystem zu entsprechen, um Gebläseluft zu einer Enteisungs-Lüftungsleiste (14) und zu Seitenschlitzen (16) zu verteilen,
- erste Rohrleitungen (340) den Einlass (33) mit den ersten Auslässen (34) verbinden und sich zwischen Kanaltrennwänden (39) und Seitenwänden (36) des Gehäuses (30) erstrecken,
- eine zweite Rohrleitung (350) den Einlass (33) mit dem zweiten Auslass (35) verbindet und sich zumindest zum Teil zwischen den Kanaltrennwänden (39) erstreckt,
- die zweite Rohrleitung (350) auf der Lufteinlassseite (33) in der Mitte des Lufteinlasses (33) mündet, und
- die ersten Rohrleitungen (340) zu beiden Seiten der zweiten Rohrleitung (350) münden,
**dadurch gekennzeichnet, dass** das Gehäuse (30) ein differenziertes Profil gemäß einer Ebene (L-V) lotrecht zur Querachse (T) zwischen den ersten (340) und zweiten (350) Rohrleitungen aufweist.

2. Gehäuse nach Anspruch 1, **dadurch gekennzeichnet, dass** der hintere Abschnitt (32) der zweiten Rohrleitung (350) erste (37C) und zweite (38C) Wände aufweist, die sich seitlich zwischen den Kanaltrennwänden (39) erstrecken, wobei diese Wände (37C, 38C) im Wesentlichen parallel zueinander sind und sich global geradlinig erstrecken, um den Widerstand gegen das Strömen der vom Klimagerät ausgegebenen Luft zu begrenzen.

3. Gehäuse nach Anspruch 2, **dadurch gekennzeichnet, dass** es zwei erste Auslässe (34) gibt, die seitlich um den zweiten Auslass (35) herum angeordnet sind, wobei jede Rohrleitung (340) einer Öffnung (22) der Lüftungsleiste (14) entspricht, wobei die Lüftungsleiste zwei entfernte Öffnungen aufweist.

4. Gehäuse nach einem der vorhergehenden Ansprüche, **dadurch gekennzeichnet, dass** die ersten Rohrleitungen (340) in der Ebene (L-V) ein S-förmiges Profil aufweisen.

5. Gehäuse nach Anspruch 1 bis 4, **dadurch gekennzeichnet, dass** ein Ablenkblech (40) in der zweiten Rohrleitung (350) in Höhe der vorderen Wände der Seitenkanäle (28) angeordnet ist, wobei dieses Ablenkblech (40) eine konvexe Wölbung (41) nach vorne im Wesentlichen auf halbem Weg zwischen den Kanaltrennwänden (39) zur Führung des Luftstroms zu den Seitenschlitzen (16) aufweist.

6. Gehäuse nach Anspruch 1 bis 4, **dadurch gekennzeichnet, dass** ein Ablenkblech (400) in der zweiten Rohrleitung (350) in Höhe der vorderen Wände der Seitenkanäle (28) angeordnet ist, wobei dieses Ablenkblech (400) eine zusätzliche Öffnung (420) zum Enteisen des zentralen Bereichs der Windschutzscheibe und konvexe Wölbungen (410, 411) nach vorne um diese zusätzliche Öffnung herum zum Führen des Luftstroms zu den Seitenschlitzen (16) aufweist.

7. Gehäuse nach Anspruch 1 bis 4, **dadurch gekennzeichnet, dass** eine zusätzliche Öffnung (4200) sich zwischen Zusatzkanalwänden (430A, 430B) erstreckt, die in der zweiten Rohrleitung (350) angeordnet sind, wobei die für die Seitenschlitze (16) bestimmte Luft zu beiden Seiten der zusätzlichen Öffnung (4200) zwischen den Kanaltrennwänden (39) und seitlichen Ablenkblechen (4000) durchgeht, die sich zwischen den vorderen Kanten (431A, 431B) der Zusatzkanalwände (430A, 430B) und der vorderen Wand der Seitenkanäle (28) erstrecken.

8. Gehäuse nach Anspruch 7, **dadurch gekennzeichnet, dass** die seitlichen Ablenkbleche (4000) eine gekrümmte Form haben, um den Widerstand gegen das Strömen der Luft zu den Seitenschlitzen (16) zu begrenzen.

9. Gehäuse nach einem der vorhergehenden Ansprüche, **dadurch gekennzeichnet, dass** die Kanaltrennwände (39) und/oder die Zusatzkanalwände (430A, 430B) translations- und/oder drehbeweglich sind, um den Luftstromanteil zwischen den Auslässen des Verteilergehäuses (30) zu verändern.

10. Gehäuse nach einem der vorhergehenden Ansprüche, **dadurch gekennzeichnet, dass** es von einem ersten (310) und von einem zweiten Element (320) geformt wird, das einen Deckel bildet, wobei mindestens eines von ihnen eine Dichtung trägt.

11. Fahrzeug, **dadurch gekennzeichnet, dass** es ein Gehäuse nach einem der vorhergehenden Ansprüche aufweist, wobei das Gehäuse in das Armaturenbrett so eingepasst ist, dass die von einem Klimagerät ausgegebene Luft bis zur Windschutzscheiben-Lüftungsleiste (14) und zu den Seitenschlitzen (16) zirkuliert.
